Europäisches Patentamt

European Patent Office

Office européen des brevets

(19)

(11) Veröffentlichungsnummer : **0 019 055**
**B1**

(12) **EUROPÄISCHE PATENTSCHRIFT**

(45) Veröffentlichungstag der Patentschrift :
**15.12.82**

(21) Anmeldenummer : **80101400.2**

(22) Anmeldetag : **18.03.80**

(51) Int. Cl.³ : **C 02 F   1/52, C 02 F   3/08,
B 01 D 35/22**

(54) **Filteranlage für die Wasseraufbereitung.**

(30) Priorität : **21.05.79 CH 4720/79**

(43) Veröffentlichungstag der Anmeldung :
**26.11.80 (Patentblatt 80/24)**

(45) Bekanntmachung des Hinweises auf die Patenterteilung : **15.12.82 Patentblatt 82/50**

(84) Benannte Vertragsstaaten :
**AT DE FR GB IT NL**

(56) Entgegenhaltungen :
**BE A 482 853
DE A 1 792 409
DE A 1 917 059
FR A 1 105 659
GB A 1 496 191
US A 2 404 215
US A 2 585 808**

(73) Patentinhaber : **GEBRÜDER SULZER AKTIENGE-
SELLSCHAFT
Zürcherstrasse 9
CH-8401 Winterthur (CH)**

(72) Erfinder : **Gros, Henry, Dr.
Im Kleinbasel
CH-8357 Guntershausen (CH)**
Erfinder : **Gnieser, Jürgen
Langgrütstrasse 184
CH-8047 Zürich (CH)**

(74) Vertreter : **Dipl.-Ing. H. Marsch Dipl.-Ing. K. Sparing
Dipl.-Phys.Dr. W.H. Röhl Patentanwälte
Retheistrasse 123
D-4000 Düsseldorf (DE)**

## Filteranlage für die Wasseraufbereitung

Die Erfindung betrifft eine Filteranlage für die Wasseraufbereitung mit mindestens einem, aus einem körnigen Filtermaterial bestehenden Filterfeld.

Für die Filtration von Schwebestoffen in Filteranlagen mit mindestens einem, aus körnigem Filtermaterial aufgebauten Filterfeld ist es notwendig, eine möglichst gleichmässige Verteilung der zu filtrierenden Schwebestoffe über das ganze Filterfeld zu erreichen, ehe sich diese zu aufgrund ihrer Schwerkraft rasch absinkenden Flocken zusammenlagern. Für die im allgemeinen rechteckig ausgebildeten Filterfelder offener Beton-Filteranlagen bereitet eine rasche Verteilung sehr häufig Schwierigkeiten.

Das Problem der Gleichverteilung hat besonders Bedeutung bei Anlagen, in denen für eine sogenannte Flockungs- oder eine Flockenfiltration dem Rohwasser vor seinem Eintritt in das Filterfeld Flockungs- oder Flockungshilfsmittel -z.B. Fe- und/oder Al-Salze bzw. wasserlösliche Polymere, bestehend aus z.B. Polymethylmetacrylat — zugegeben werden. Neben der Stoffzugabe wird dabei dem Rohwasser in den Flockungsbecken — beispielsweise mit Rührern — Energie zugeführt, um die Flockenbildung zu verbessern. Nach erfolgter Flockenbildung muss das mit Flocken befrachtete Rohwasser dann möglichst ohne Turbulenzen und ohne mechanische Beanspruchung der Flocken auf das Filterfeld geleitet und zur Erzielung einer möglichst gleichmässigen Filterbelastung über die ganze Filteroberfläche verteilt werden. Dauer und Umfang des Energieeintrages sind dabei sorgfältig zu dosieren, um eine optimale Flockenbildung herbeizuführen und aufrechtzuerhalten, um die gebildeten Flocken vor ihrem Absetzen im Filterfeld nicht durch Scherkräfte wieder zu zerstören (F. G. Hötter u.a. « Eine technische Konzeption der Flockenfiltration zur Aufbereitung von Bachwässern mit stark schwankender Wasserbeschaffenheit und Abflusscharakteristik » aus der DVGW-Schriftenreihe Wasser Nr. 7 (1976), ZfGW-Verlag Frankfurt, S. 72-92).

Aus der GB-A 1 496 191 ist eine Filteranlage bekannt, die eine mit Kies gefüllte Koagulations- oder Flockungszone aufweist, in der ein mechanischer Rührer für den Energieeintrag vorhanden ist. In Strömungsrichtung schließt an diese Flockungszone ein Flotationsbecken für die Trennung der in der Flockungszone gebildeten Schmutzflocken von dem zu reinigenden Wasser an. Für die Nachreinigung des Wassers folgt auf das Flotationsbecken noch ein mit körnigem Filtermaterial bestücktes Filterfeld. Wie bei der vorstehend diskutierten Anlage findet die Zugabe von Flockungsmitteln und damit die Flockenbildung relativ frühzeitig vor dem Festbett des Filterfeldes statt, so daß die Flocken im wesentlichen bereits vor dem Filterfeld entstehen und sich von der Flüssigkeit separieren ; aus diesem Grunde ist zwischen dem Filterfeld und der Flockungszone bei dieser Anlage das Flotationsbecken angeordnet, in dem der wesentliche Teil der Flocken separiert wird.

Aufgabe der Erfindung ist es, die Verteilung des Rohwassers in einer Filteranlage der genannten Art zu verbessern und vor allem bei der geschilderten Zudosierung von Flockungs- und Flockungshilfsmitteln durch verzögerten Energieeintrag eine zu frühe Ausbildung von Flocken, die rasch absinken, zu verhindern. Die Lösung dieser Aufgabe erfolgt dadurch, dass im Rohwasserraum des Filterfeldes mindestens ein mechanischer Rührer vorhanden ist.

Mit den Rührern direkt im Filterfeld ist eine rasche, gleichmässige Verteilung des flockenhaltigen Rohwassers gewährleistet, ehe es zur Bildung von sedimentationsfähigen Agglomerationen der Schwebestoffe kommt. Insbesondere wird bei Zugabe von die Flockung fördernden Stoffen durch den verspäteten Energieeintrag die Agglomerationsphase der Flockenbildung in das Filterfeld selbst verlegt. Bei Anlagen, in denen die Flockung stimulierende Stoffe zugesetzt werden, ergibt sich darüberhinaus der zusätzliche Vorteil, dass separate Flockungsbecken entfallen können, weil die in die Züführleitung des Rohwassers hinein dosierten Zusatzstoffe im wesentlichen erst im Rohwasserraum des Filterfeldes zur Wirkung kommen.

Soll die Anlage für biologische Verfahren der Wasserreinigung und -aufbereitung — z.B. in der biologischen Abwasserbehandlung — eingesetzt werden, so bietet es besondere Vorteile, wenn der Rührer als ein um eine horizontale Achse rotierender, wasser- und luftdurchlässiger Tauchtropfkörper ausgebildet ist, der das Wasserniveau im Rohwasserraum des Filterfeldes überragt ; der Tauchtropfkörper kann dabei in bekannter Weise beispielsweise aus fest aneinander geschweissten, gewellten Plastikscheiben, aus quer zur Drehachse angeordneten Scheiben oder aus einem quer zur Drehachse spiralförmig eng gewickelten festen Band bestehen oder als ein zylindrischer Korb ausgebildet sein, welcher Raschig-Ringe und/oder -kugeln oder andere Füllkörper enthält. Bei Anlagen mit Tauchtropfkörpern als Rührer bilden sich auf den inneren und äusseren Oberflächen des Tropfkörpers bzw. der Füllkörper Bakterienkulturen, durch die eine biologische Reinigung des Wassers erfolgt. Diese Kulturen von Mikroorganismen, Bakterien und mikroskopischen Pilzen entstehen bei der Behandlung von Oberflächenwasser beispielsweise nach mehreren Wochen, bei der Behandlung von mechanisch-biologisch geklärten Abwässern nach einigen Tagen. Durch die Bildung eines solchen Bakterienrasens werden biologisch abbaubare Substanzen, insbesondere auch — als Ammonium-Ion gebundener — Stickstoff oxidiert und abgebaut.

Dies geschieht in einem stärkeren Masse als wenn nur zwischen den Filterkörnern fixierte Organismen diesen Abbau bewirken ; denn im letzteren Fall ist der Abbau durch den im Wasser maximal löslichen Sauerstoff begrenzt, da im Filtermaterial selbst die Oxidation nur bis zum vollständigen Verbrauch des Sauerstoffes möglich ist. Die auf den erwähnten Tauchtropfkörper fixierten Mikroorganismen werden jedoch durch das Rotieren teilweise über der Oberfläche des Wassers in periodischer Wiederholung mit Luft und mit Wasser in Kontakt gebracht, so dass eine Oxidation der im Wasser befindlichen Substanzen möglich ist, ohne den darin gelösten Sauerstoff zu verbrauchen ; darüberhinaus kann der Sauerstoffgehalt des Wassers im Ueberstauraum praktisch auf den Sättigungswert gebracht werden, so dass im Ueberstauraum und im Filtermaterial selbst der aerobe Abbau zusätzlich verbessert werden kann.

Von besonderen Antriebsmotoren für die Rührer wird eine solche Anlage unabhängig, wenn man die Tauchtropfkörper als Schaufelrad ausbildet, gegen dessen eingetauchte Schaufeln Luftstrahlen geleitet sind, womit gleichzeitig eine zusätzliche Belüftung des Rohwasserraums und des Tauchtropfkörpers erreicht wird.

Um, wie bekannt, einen zu hohen Energieeintrag zu vermeiden, ist es vorteilhaft — insbesondere bei konventionellen Rührern —, die Rührgeschwindigkeit auf maximal etwa 200 U/min zu begrenzen. Weiterhin kann es nützlich sein, übermässige Zirkulationsströmungen in dem Rohwasserraum des Filterfeldes durch Prallbleche zu verhindern. Darüberhinaus ist es zweckmässig, zusätzlich zu den Prallblechen zur Verhinderung von das körnige Filtermaterial aufwirbelnden Zirkulationen die Rührer in ihrer Drehrichtung umschaltbar auszubilden. Schliesslich kann die Rührgeschwindigkeit regelbar sein, wobei diese Regelung in Abhängigkeit von Menge und Eigenschaften des Rohwassers bzw. von Eigenschaften des Reinwassers erfolgen kann.

Die gewünschte Rührgeschwindigkeit — bzw. genauer ihr Produkt mit der Dauer des Rührens, also der Energieeintrag, der mit Vorteil einen Wert im Bereich zwischen 10'000 und 25'000 haben soll — ist dabei unter anderem abhängig von der Menge und der Art der Schwebestoffe — beispielsweise ihrem Durchmesser oder ihrem Volumen pro Masseinheit (dem sogenannten Schlammvolumen) — ; z.B. erfordern kleine, relativ kompakte Formen von Schwebestoffen, d.h. solche mit kleinem Schlammvolumen, grössere Rührgeschwindigkeiten bzw. höheren Energieeintrag, als solche mit grossem Schlammvolumen.

Weitere Grössen für die Steuerung der Rührgeschwindigkeit bzw. des Energieeintrages können sein : Die Menge des anfallenden Rohwassers, der Schwebestoffgehalt des Roh- oder Reinwassers — gemessen beispielsweise über die Trübung —, die Länge der Filterlaufzeiten bis zum Durchbruch oder Verstopfen, der Druckabfall im Filterfeld, Art und Korngrösse der Filtermaterialien oder die Konzentration der zugegebenen Flockungs- bzw. Flockungshilfsmittel. Als Regelgrösse haben sich dabei weiterhin die Filterlaufzeiten oder der Druckabfall im Filtermaterial bewährt. Dabei wird die Rührgeschwindigkeit bzw. der Energieeintrag zweckmässigerweise so auf die Filterlaufzeiten abgestimmt, dass sich eine maximale Filterlaufzeit ergibt und ihr Ende nicht aufgrund eines Filterdurchbruchs, sondern wegen einer Filterverstopfung gegeben ist.

Im folgenden wird die Erfindung anhand von Ausführungsbeispielen näher erläutert.

Figur 1 zeigt in einem ersten Beispiel schematisch in einem Schnitt I-I von Fig. 2 einen Querschnitt durch ein Filterfeld einer erfindungsgemäss ausgebildeten Filteranlage, während

Figur 2 eine Aufsicht auf Fig. 1 von oben ist ;

Figur 3 gibt in gleicher Darstellung wie Fig. 1 eine Ausführungsform mit Tauchtropfkörpern als Rührer wieder.

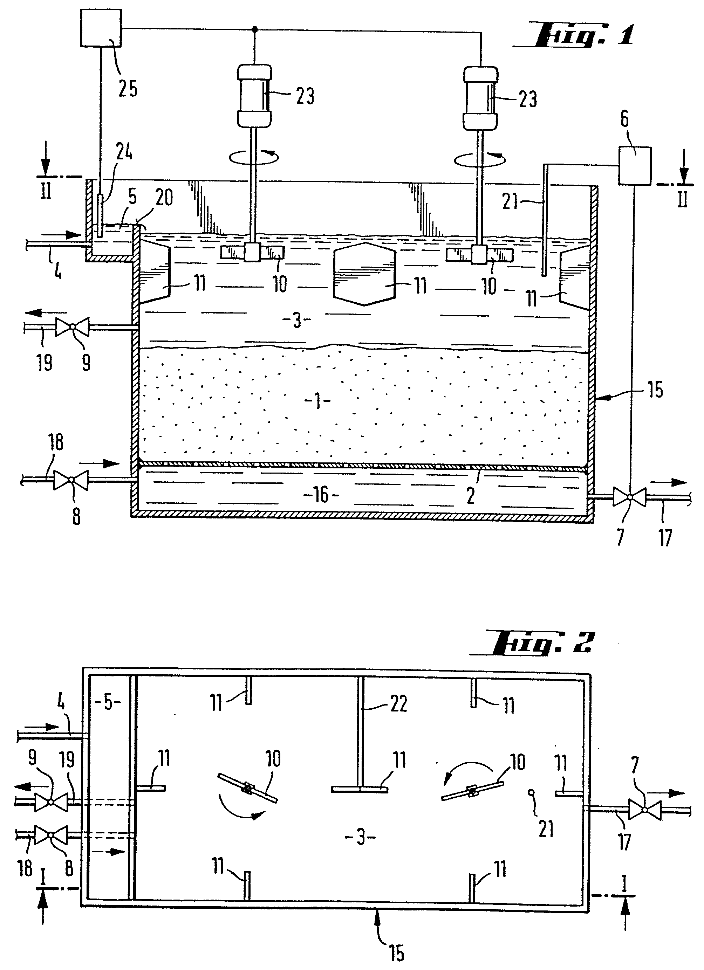

Zwecks Elimination gewisser, sehr kleiner Schwebestoffe (z.B. Kolloide) oder zwecks Ausfällung bzw. Adsorption gewisser gelöster Inhaltsstoffe (Phosphor-Elimination) enthält die Anlage nach Fig. 1 in einem Filterbecken 15 das Filterfeld 1 bildendes, körniges Filtermaterial, das auf einem Düsenboden 2 gelagert ist. Unter diesem ist ein Sammelraum 16 für das Filtrat vorgesehen, aus dem eine mit einem Regelventil 7 versehene Auslaufleitung 17 das Filtrat oder Reinwasser einer weiteren Behandlung und/oder Verwendung zuführt. In den Raum 16 mündet weiterhin eine Leitung 18, in der ein Absperrorgan 8 vorhanden ist ; durch diese Leitung werden in das Filterfeld 1 zu seiner Rückspülung Luft und/oder Rückspülwasser geleitet.

Der über dem Filterfeld oder Filterbett 1 gelegene Rohwasser- oder Ueberstauraum 3 wird mit Rohwasser durch einen Zufluss 4 gespeist, der in einen über eine Schmalseite des Beckens 15 verlaufenden Kanal 5 mündet ; von diesem führt eine Ueberfallkante 20 in den Ueberstauraum 3. Mit 19 ist eine Wegführleitung für das Spülwasser bezeichnet, die mit Hilfe eines Organs 9 verschliessbar ist.

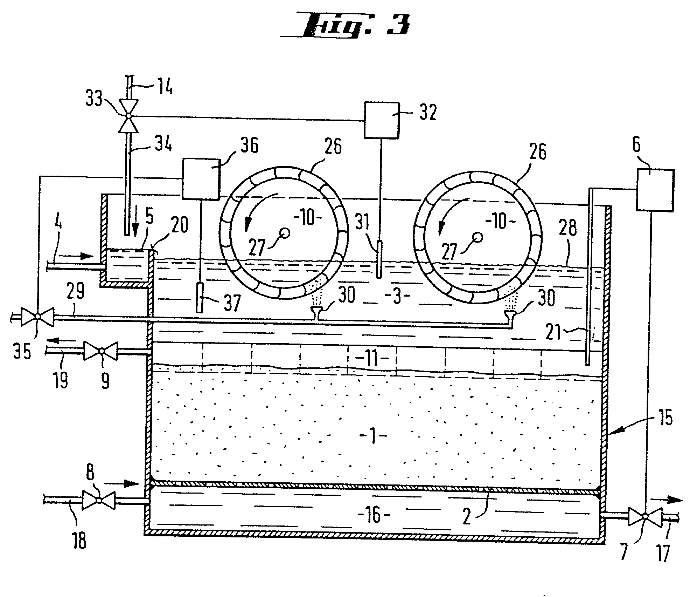

Erfindungsgemäss sind im Ueberstauraum 3 zwei Rührer 10 angeordnet, die mit schematisch angedeuteten Antrieben 23 in Verbindung stehen. Weiterhin sind im Ueberstauraum 3 an den Wänden des Beckens 15 befestigte bzw. durch strebenartige Stangen 22 (Fig. 2) gehaltene Prallbleche 11 vorgesehen, an denen die von den Rührern 10 erzeugte Zirkulationsströmung umgelenkt wird, so dass das Filtermaterial aufwirbelnde Wirbelbildungen vermindert oder sogar vermieden werden.

Das Niveau des Rohwassers im Ueberstauraum 3 wird mindestens annähernd konstant gehalten durch einen Niveauregler 6, der von einem Messfühler 21 gesteuert wird und auf das Regelventil 7 in der Reinwasser-Abflussleitung 17 einwirkt.

Weiterhin ist im Kanal 5 ein Trübungsmesser 24 vorgesehen, mit dem die Trübung des dem Filterfeld 1 zufliessenden Rohwassers, die ein Mass für den Schwebestoffgehalt ist, gemessen wird. Der Messwert des Fühlers 24 gelangt auf ein Steuer- oder Regelgerät 25 und dient dazu, die Antriebe der Rührer 10 zu beeinflussen und die Drehzahl und damit den durch sie hervogerufenen Energieeintrag zu variieren. Weiterhin erhält das Gerät 25 Umschaltorgane für die erwähnte Umschaltung der Drehrichtung der Rührer 10.

Die evtl. Zugabe von Flockungs- bzw. Flockungshilfsmitteln erfolgt in der Zuflussleitung 4 für das Rohwasser, wobei die dafür notwendigen Dosiereinrichtungen nicht ausdrücklich gezeigt sind.

Fig 3 unterscheidet sich von Fig. 1 nur dadurch, dass als Rotoren 10 Tauchtropfkörper eingesetzt sind, die nach Art von Wasserrädern mit Schaufeln 26 ausgerüstet sind. Ihre Drehachse 27 liegt oberhalb des Rohwasserspiegels 28. Die Höhenlage der Drehachsen 27 zu diesem Wasserspiegel 28 ist auf den Durchmesser der Tauchtropfkörper derart abgestimmt, dass die Tauchtropfkörper etwa bis zur Hälfte ihres Radius in das Rohwasser eintauchen.

Die Tauchtropfkörper oder Rührer 10 sind angetrieben durch Luftstrahlen, die aus einer Leitung 29 austreten, die im Rohwasserraum 3 verlegt und mit Austrittsdüsen 30 abgeschlossen ist. Die in den Rohwasserraum 3 austretende Luft bewirkt gleichzeitig eine Belüftung des Rohwassers und des Filterfeldes 1.

Eine Mess-Sonde 31 zur Messung des pH-Wertes ist im Rohwasser- oder Ueberstauraum 3 vorgesehen; sie wirkt über ein pH-Wert-Steuerorgan 32 auf ein Durchflussorgan 33 in einer Leitung 34, durch die in den Verteilkanal 5 aus einem nicht gezeigten Vorrat den pH-Wert beeinflussende Basen oder Säuren — beispielsweise Natriumhydroxid, Natriumbikarbonat oder Schwefelsäure — zudosiert werden können.

Für die Regelung des Rührerantriebs ist bei diesem Beispiel ein Durchflussregelventil 35 in der Luftleitung 29 vorgesehen, durch das die den Austrittsdüsen 30 zufliessende Luftmenge gesteuert wird. Dafür wird der Sauerstoffgehalt im Ueberstauraum 3 durch einen Messfühler 37 gemessen und auf ein Steuergerät 36 gegeben, dessen Ausgangssignal das Ventil 35 beeinflusst. Die benötigten Luftgeschwindigkeiten an den Düsen 30 betragen im allgemeinen, bezogen auf das leere Filterbecken, zwischen 2-20 m³/m²h.

Die Funktionsweise der neuen Anlage nach Fig. 1 und 2 sei nunmehr in einem Anwendungsbeispiel verdeutlicht. Als Rohwasser wird durch die Zuflussleitung 4 in das Filterfeld mechanisch-biologisch geklärtes, kommunales Abwasser eingespeist, das zwischen 10 und 50 g/m³ Schwebestoffe enthält. Diese bestehen aus noch im geklärten Abwasser befindlichen, suspendierten Teilchen und — im Falle der Durchführung einer Flocken- oder einer Flockungsfiltration — aus durch Zugabe von Flockungs- bzw. Fällmitteln, z.B. Eisensalzen, zusätzlich entstehenden, unlöslichen Partikeln.

Die Zugabe von Flockungsmitteln, welche für die Entstabilisierung von Kolloidpartikeln und/ oder das Adsorbieren bzw. Ausfällen gewisser, sich in Lösung befindlicher Substanzen, wie z.B. Phosphor-Salzen oder organischen Substanzen, durchgeführt wird, erfolgt in der Rohwasserzuflussleitung 4 vor dem Filterfeld 1, wobei gegebenenfalls zusätzlich eine Einrichtung vorgesehen sein kann, in der eine intensive Durchmischung stattfindet. Die bei der Zugabe und Durchmischung eingetragene Energie sorgt für die Bildung von zahlreichen Kristallisationskeimen. Diese wachsen dann in den darauf folgenden Zonen mit ruhigeren Strömungsverhältnissen, vor allem im Ueberstauraum 3, zu Flocken heran.

Die Zugabe von sogenannten Flockungshilfsmitteln, welche die Kohäsion der Flocken noch zu erhöhen vermag, ist in gewissen Fällen, z.B. bei höheren Filtrationsgeschwindigkeiten, von Vorteil. Diese Flockungshilfsmittel bestehen z.B. aus natürlichen oder synthetischen, im Wasser löslichen Polymermolekülen, beispielsweise Polymethylmetacrylate. Die Zugabe des Flockungshilfsmittels — bei synthetischen Produkten in Mengen von z.B. $1\text{-}8 \cdot 10^{-4}$ g/l Rohwasser — erfolgt ebenfalls vor dem dargestellten Zufluss 4 im Verteilkanal 5 oder erst im Ueberstauraum 3, was jedoch nicht ausdrücklich gezeigt ist.

Die Rührer 10, welche — je nach ihrer Bauart und Grösse — Rührgeschwindigkeiten von 10 bis 100 U/min haben, erzeugen mit ihrem Energieeintrag Turbulenzen, die zur Bildung gut abfiltierbarer Flocken notwendig sind. Ein weiterer Energieanteil für die Flockenbildung wird der Strömung im Filterfeld 1 entzogen.

Die Filtrationsgeschwindigkeit, bezogen auf die Oberfläche des Filterfeldes 1 aus körnigen Medien, beträgt beispielsweise 3 bis 25 m³/m² · h. Das Filterfeld 1 kann in einer Anlage allein oder als Teil einer ganzen Reihe von nebeneinander angeordneten Filterfeldern eingesetzt sein. Im letzteren Falle ist es möglich, ohne den Betrieb der Filteranlage zu unterbrechen, einzelne Filterfelder rückzuspülen, während bei Anlagen mit nur einem Filterfeld 1 die Rückspülung intermittierend mit dem Filterbetrieb durchgeführt wird. Die Rückspülung erfolgt, wenn die maximale operationelle Beladung des Filterfeldes 1 an Schwebestoffen erreicht worden ist, und das Filterfeld 1 nicht weiter belastet werden kann, ohne dass ein Durchbruch von Feststoffen oder ein unzulässig hoher Druckabfall, d.h. ein Verstopfen des Filterfeldes 1 stattfindet. Durch die Rückspülung wird das Filterfeld in seinen ursprünglichen, unbeladenen Zustand geführt, so dass es erneut in Filtrationsbetrieb genommen werden kann.

Im allgemeinen werden in der beschriebenen Anlage Schwebestoff-Eliminationen von 50 bis 95 % erreicht. Die Elimination von kolloidalen, in Lösung befindlichen Substanzen hängt von der Zugabe an Flockungsmittel und von den Eigenschaften des Filters bezüglich der Elimination sehr feiner Partikel ab. Sie kann Werte von 10 bis 95 % erreichen.

Die Regelung der Rührgeschwindigkeit der Rührer 10 — beispielsweise über drehzahlveränderliche und umkehrbare Antriebe 23 — erlaubt einen differenzierten, den Betriebsbedingungen angepassten Energieeintrag, der auf eine Optimierung der Flockenbildung und der Schwebestoffausscheidung ausgerichtet ist.

Da die Wirkung der eingebrachten Energie proportional zur Verweilzeit der Flüssigkeit in den Rührern 10 ist, ist es z.B. möglich, bei höheren Durchsätzen, d.h. erhöhtem Rohwasseranfall, den Energieeintrag in Funktion des Durchsatzes so zu variieren, dass der spezifische Energieeintrag pro Volumeneinheit filtrierten Wassers etwa gleich bleibt oder z.B. erhöht wird. Da der Energieeintrag, der durch den Rührer 10 erzeugt wird, mit steigender Drehzahl zunimmt, wird diese Drehzahl so gesteuert, dass sie bei sinkender Schwebkonzentration bzw. steigendem Durchsatz zunimmt, die beispielsweise durch den Trübungsmesser 24 bzw. durch eine nicht ausdrücklich gezeigte Durchflussmesseinrichtung in der Zuflussleitung 4 ermittelt werden.

In gewissen Fällen, in denen verfrühte Durchbrüche eine Folge von zu geringem Energieeintrag sind, kann man bei sich verschlechternden Schwebstoff-Eliminationen — diese können z.B. durch Vergleich der Trübungswerte im Ein- und Ausgang des Filterfeldes festgestellt werden — den Energieeintrag, d.h. die Rührerdrehzahl erhöhen. Dieses Vorgehen ist jedoch nur bis zu einer gewissen Grenze möglich, denn bei Ueberschreiten einer gewissen Rührerdrehzahl von beispielsweise 200 bis 300 U/min werden die erzeugten Scherkräfte so gross, dass sie nicht mehr zur Flockenbildung beitragen, sondern die gebildeten Flocken zerstören, was erneut zu Durchbrüchen der Schwebstoffe durch das Filterfeld führt.

Befinden sich im Wasser auch organische oder anorganische Substanzen, welche von Mikroorganismen abgebaut bzw. oxidiert werden, so setzt man mit Vorteil eine Anlage nach Fig. 3 ein. Bei ihr sind im Filterfeld 1 und besonders auf den Oberflächen der Tauchtropfkörper Kulturen von, in diesem Falle aeroben, Mikroorganismen vorhanden, die die biologische Oxidation und damit den Abbau der genannten Schadstoffe bewirken und fördern. Für die Erläuterung der Funktionsweise einer Anlage nach Fig. 3 sei eine Abwasserreinigung angenommen.

Im betrachteten Abwasser betrage der BSB5-Wert — der die Sauerstoffmenge charakterisiert, die für den mikrobiellen Abbau der Schadstoffe notwendig ist — ca. 5 bis 40 mg/l. Von den anorganischen Substanzen gilt es vor allem im Ammonium-Ion gebundenen Stickstoff, der in Konzentrationen von 1 bis 15 mg/l vorhanden sei, zu oxidieren. Die dafür notwendigen nitrifizierenden Bakterien befinden sich und vermehren sich vorzugsweise an der Oberfläche der Tauchtropfkörper; sie sind jedoch in gewissem Umfang auch zwischen den Filtermaterialkörnern vorhanden. Sie bewirken eine Oxidation des Ammoniums zu Nitrat. Die dabei ablaufenden Reaktionen würden eine Reduktion des vorhandenen pH-Wertes von beispielsweise 7,5 auf etwa 6 verursachen. Um dies zu kompensieren und somit einen für das Wachstum der Mikroorganismen günstigen pH-Wert im Ueberstauraum 3 zu halten, wird — z.B. gesteuert durch die pH-Elektrode 31 — eine 3 %ige Natriumbikarbonat-Lösung (30 g/l Lösungsmittel) zudosiert.

Die Elimination von BSB5 verursachenden Substanzen kann neben dem mikrobiellen Abbau teilweise auch auf Absorption an den anorganischen, durch die Fällmittel erzeugten Flocken basieren. Durch die Anordnung im Ueberstauraum 3 der Filteranlage und die Durchführung einer Flockungsfiltration sind insgesamt BSB5-Reduktionen von beispielsweise 50 bis 80 % zu erwarten. Die Nitrifikationsleistungen bei den oben genannten Stickstoffkonzentrationen liegen zwischen 60 und 90 %.

Die an sich bekannten rotierenden Tauchtropfkörper haben beispielsweise eine innere Oberfläche von ca. 250 m²/m³ und einen Durchmesser von ca. 3 m; ihre Umdrehungsgeschwindigkeit wird am besten zwischen 2 und 10 Umdrehungen pro Minute gewählt. Die in Fig. 3 dargestellten Prallbleche haben etwa eine Höhe von 20 bis 40 cm und reichen 5 bis 10 cm tief in das Filtermedium hinein.

Während des Rückspülens, bei welchem Luft durch das Filter geschickt wird, und somit Filterkörner im Ueberstauraum, verbunden mit hohen Turbulenzen, bis an die Oberfläche des Wassers gelangen können, ist darauf zu achten, dass die Oberfläche des Spülwassers sich unter dem untersten Teil der Tauchtropfkörper befindet; anderenfalls würde in den meisten Fällen mit der Zeit eine Beschädigung der Tropfkörper erfolgen und/oder der Rasen von gewachsenen Mikroorganismen zu stark beansprucht und weggerieben.

Das Drehen der Tauchtropfkörper, welche durch das Ausblasen von Luft aus den Düsen 30 angetrieben sind, bewirkt — wie bei einer Anlage nach Fig. 1 und 2 — gleichzeitig den Energieeintrag und die Turbulenzen, die zur Bildung gut abfiltrierbarer Flocken notwendig sind.

**Ansprüche**

1. Filteranlage für die Wasseraufbereitung mit mindestens einem, aus einem körnigen Filtermaterial bestehenden Filterfeld, dadurch gekennzeichnet, dass im Rohwasserraum (3) des Filterfeldes (1) mindestens ein mechanischer Rührer (10) vorhanden ist.

2. Filteranlage nach Anspruch 1, dadurch gekennzeichnet, dass der Rührer (10) als ein um eine horizontale Achse rotierender, Wasser und Luft durchlässiger Tauchtropfkörper ausgebildet ist, der das Wasserniveau im Rohwasserraum (3) des Filterfeldes (1) überragt.

3. Filteranlage nach Anspruch 1 oder 2, dadurch gekennzeichnet, dass die Rührgeschwindigkeit des oder der Rührer (10) bis zu 200 U/min beträgt.

4. Filteranlage nach Anspruch 1 oder 2, dadurch gekennzeichnet, dass im Rohwasserraum (3) zusätzlich Prallbleche (11) zur Kanalisierung bzw. Minderung der Zirkulationsströmungen angeordnet sind.

5. Filteranlage nach Anspruch 1 oder 2, dadurch gekennzeichnet, dass die Drehrichtung der Rührer (10) umschaltbar ist.

6. Filteranlage nach Anspruch 2, dadurch gekennzeichnet, dass der Tauchtropfkörper als Schaufelrad ausgebildet ist, gegen dessen eingetauchte Schaufeln (26) zu seinem Antrieb Luftstrahlen gerichtet sind.

7. Filteranlage nach Anspruch 1 oder 2, dadurch gekennzeichnet, dass die Rührgeschwindigkeit der Rührer (10) regelbar ist.

## Claims

1. A filter plant for water conditioning, the plant having at least one filter bed consisting of a granular filter material, characterised in that at least one mechanical agitator (10) is provided in the raw water chamber (3) of the filter bed (1).

2. A filter plant according to claim 1, characterised in that the agitator (10) is a water- and air-pervious dip- and -drip member which rotates around a horizontal axis and which projects above the water level in the raw water chamber (3) of the filter bed (1).

3. A filter plant according to claim 1 or 2, characterised in that the or each agitator (10) runs at a speed of up to 200 r.p.m.

4. A filter plant according to claim 1 or 2, characterised in that deflector plates (11) for channelling for reducing circulating flows are also disposed in the raw water chamber (3).

5. A filter plant according to claim 1 or 2, characterised in that the direction of rotation of the agitators (10) is reversible.

6. A filter plant according to claim 2, characterised in that the dip- and drip-member is a vane wheel against whose immersed vanes (26) airstreams are directed to drive it.

7. A filter plant according to claim 1 or 2, characterised in that the agitating speed of the agitators (10) is variable.

## Revendications

1. Installation de filtration pour le traitement des eaux comprenant au moins un champ de filtration constitué par une matière granulaire de filtration, caractérisée en ce qu'au moins un agitateur mécanique (10) est disponible dans l'espace d'eau brute (3) du champ de filtration (1).

2. Installation de filtration selon la revendication 1, caractérisée en ce que l'agitateur (10) se présente sous la forme d'un lit percolateur immergé perméable à l'air et à l'eau, tournant autour d'un axe horizontal et qui dépasse du niveau d'eau de l'espace d'eau brute (3) du champ de filtration (1).

3. Installation de filtration selon la revendication 1 ou 2, caractérisée en ce que la vitesse d'agitation du ou des agitateurs (10) atteint jusqu'à 200 tours/minute.

4. Installation de filtration selon la revendication 1 ou 2, caractérisée en ce que dans l'espace d'eau brute (3) sont disposées additionnellement des chicanes (11) pour canaliser ou réduire les courants de circulation.

5. Installation de filtration selon la revendication 1 ou 2, caractérisée en ce que le sens de rotation des agitateurs (10) peut être inversé.

6. Installation de filtration selon la revendication 2, caractérisée en ce que ledit percolateur immergé se présente sous la forme d'une roue à palettes contre les palettes (26) immergées de laquelle sont dirigés des jets d'air pour son entraînement.

7. Installation de filtration selon la revendication 1 ou 2, caractérisée en ce que la vitesse d'agitation des agitateurs (10) est réglable.

**Fig. 1**

**Fig. 2**

# Fig. 3